# EUROPEAN PATENT SPECIFICATION

(11) **EP 0 303 423 B1**
(45) Date of publication and mention of the grant of the patent: **20.10.1993**
(21) Application number: 88307297.7
(22) Date of filing: 08.08.1988
(51) Int. Cl.: G06K 11/06

(54) **Co-ordinate reading apparatus**
Koordinatenlesegerät
Appareil de lecture de coordonnées

(30) Priority: 12.08.1987 JP 201487/87
(43) Date of publication of application: 15.02.1989
(73) Proprietor: SEIKO INSTRUMENTS INC., Tokyo 136 (JP)
(72) Inventor: Morita, Yoshiyuki, Koto-ku Tokyo (JP)
(74) Representative: Miller, Joseph

(56) References cited:
- EP-A- 0 156 593
- EP-A- 0 242 598
- US-A- 3 732 557
- PATENT ABSTRACTS OF JAPAN, vol. 8, no. 159 (P-289), 24th July 1984; & JP-A-59 055 586
- PATENT ABSTRACTS OF JAPAN, vol. 6, no. 245 (P-159)[1123], 3rd December 1982; & JP-A-57 141 785

## Description

This invention relates to co-ordinate reading apparatus used for inputting position data or co-ordinate values to a computer.

Co-ordinate reading apparatus of the "electro-magnetic induction" type and of the "electro-static induction" type are widely known.

The fundamental construction and operation of co-ordinate reading apparatus of the electro-magnetic induction type corresponding to the precharacterising portion of claim 1, is disclosed in Japanese Patent Publication No. 53002045 relating to co-ordinate reading method and apparatus and in Japanese Patent Publication No. 55096411 relating to an interpolation system for a co-ordinate reader.

Co-ordinate reading apparatus of this type is capable of reading data even when a co-ordinate designator is separated from a tablet by a distance or "reading height" of up to a predetermined value.

An "absolute co-ordinate mode" refers to the mode in which a position, where the co-ordinate designator is placed, is expressed as a co-ordinate value in the co-ordinate system defined by the tablet. The co-ordinate that is read out is referred to as an "absolute co-ordinate".

A "relative co-ordinate mode" refers to the mode in which, when the co-ordinate designator is separated by more than the reading height from the tablet and is then brought within the reading height, the position initially detected within the reading height is regarded to be an origin, and the co-ordinate value detected thereafter is expressed as an increment from the origin. The co-ordinate that is read out is referred to as a "relative co-ordinate".

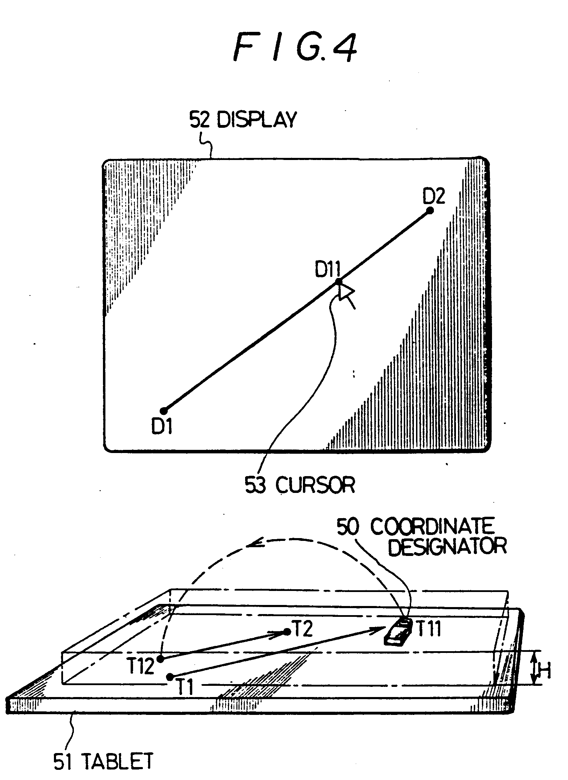

The relative co-ordinate mode is generally used for co-ordinate reading apparatus to control a cursor of a display unit. Figure 4 is a diagram explaining how to use a relative co-ordinate mode. When it is desired to move a cursor 53 from a point D1 to a point D2 on a display 52, the operation is carried out as follows:
(1) A co-ordinate designator 50 is moved from T1 to T11 within a reading height H. As a result of this first operation, the cursor 53 is moved from D1 to D11.
(2) The co-ordinate designator 50 is lifted from the tablet 51 by a distance greater than the reading height H, and is moved from T11 to T12 which is close to T1. In this case, no co-ordinate value is produced, and the cursor does not move.
(3) The co-ordinate designator 50 is then moved from T12 to T2 within the reading height H. Through this second operation, the cursor 53 is moved from D11 to D2.

What is characteristic of this operation is that the co-ordinate designator 50 is lifted up by a distance greater than the reading height H and is then returned back to the initial position.

The absolute co-ordinate mode, on the other hand, is often used for operations where a medium, such as a drawing, to be read is placed on the tablet, and dots thereon are read out. The medium to be read has a given thickness and the co-ordinate reading apparatus is usually so designed that the reading height is as great as possible.

One existing co-ordinate reading apparatus for which no publication is known, has been designed to be capable of selecting the relative co-ordinate mode and the absolute co-ordinate mode. The reading height in such co-ordinate reading apparatus, however, has generally been set to a slightly larger constant value by taking into consideration the case where the apparatus will be used in the absolute co-ordinate mode.

When the conventional co-ordinate reading apparatus is used in the relative co-ordinate mode, the co-ordinate designator must be lifted up by a relatively large distance to return it to the initial position, since the reading height has been set to a large value, and this is disadvantageous when the apparatus is used.

The reading height may be set to a relatively small value if it is simply to improve operability, but this causes the basic performance of the co-ordinate reading apparatus to be less than satisfactory.

The present invention seeks to provide a co-ordinate reading apparatus having not only high performance in the absolute co-ordinate mode but also high operability in the relative co-ordinate mode, and to provide a co-ordinate reading apparatus employing different reading height between the absolute co-ordinate mode and the relative co-ordinate mode.

According to the present invention there is provided a co-ordinate reading apparatus for inputting co-ordinate values to a computer by utilising induction signals induced in either a co-ordinate designator or a tablet to calculate designated co-ordinate values, said apparatus characterised by comprising:
co-ordinate mode setting means for selectively generating a co-ordinate mode signal corresponding to an absolute co-ordinate mode or a relative co-ordinate mode;
selecting means responsive to said co-ordinate mode setting means for outputting a first signal representing a first predetermined distance threshold value when the co-ordinate mode signal corresponds to the absolute co-ordinate mode or a second signal representing a second predetermined distance threshold value greater than the value represented by that of said first signal when the co-ordinate mode signal corresponds to the relative co-ordinate mode;
distance comparing means responsive to said selecting means for comparing a maximum value of said induction signals with said distance threshold representative signal outputted by the selecting means; and
calculating means responsive to said distance comparing means for calculating co-ordinate values from said induction signals in the event that said maximum value exceeds said distance threshold representative signal.

Said calculating means may include first means for calculating absolute co-ordinate value and second means for calculating relative co-ordinate value.

Said calculating means may include means for selecting said second means when said mode signal corresponds to the relative mode and means for selecting the first means when said mode corresponds to the absolute mode.

In such constituted co-ordinate reading apparatus, when either the relative mode or the absolute mode is set, a comparison value of an induction signal is selected accordingly, and the comparison value is compared with the maximum value of the induction signals to determine whether the output is to be produced or not. In one embodiment, the selecting means is so constituted that the reading height is relatively small when the relative mode is selected. Therefore, there is no need to lift the co-ordinate designator from the tablet to any great degree in the relative mode. This contributes strikingly to improved operability. When the absolute mode is selected, furthermore, the reading height is set to a relatively large value, and the basic performance is not penalised when reading the co-ordinates.

The invention is illustrated, merely by way of example, in the accompanying drawings, in which:-
Figure 1 is a block diagram of a co-ordinate reading apparatus according to the present invention;
Figure 2 is a block diagram of a co-ordinate calculation unit of the apparatus of Figure 1;
Figure 3 is a flow chart of the co-ordinate value outputting unit of Figure 2; and
Figure 4 is a diagram explaining how to use a relative co-ordinate mode of a co-ordinate reading apparatus.

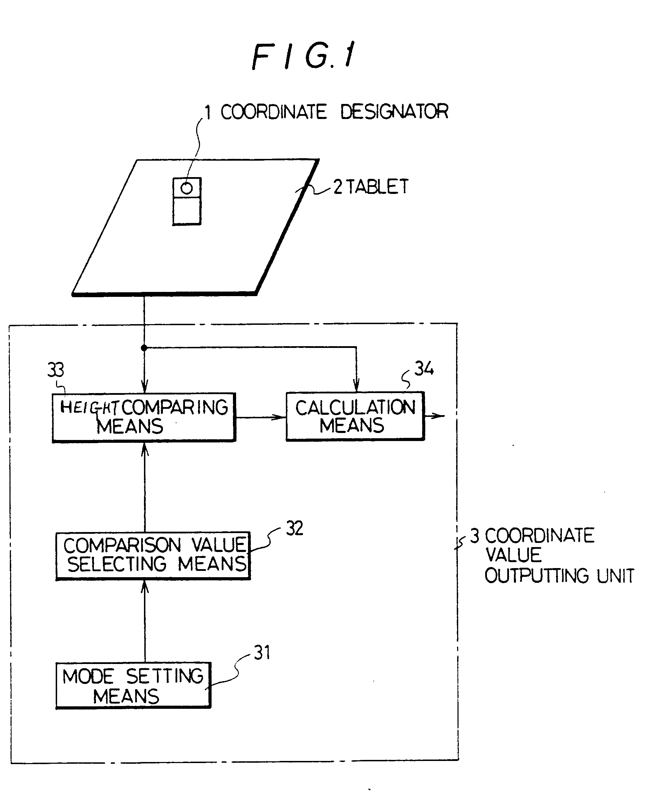

Figure 1 is a block diagram of a co-ordinate reading apparatus according to the present invention. A co-ordinate designator 1 has a coil (not shown) for generating an alternating magnetic field. A tablet 2 contains a plurality of conductors (not shown) called sense lines. A mode setting means 31 produces signals depending upon a mode that is selected. A comparison value selecting means 32 receives a signal from the mode setting means and produces a comparison value depending upon the mode set. The induction signal produced from the tablet 2 is compared with a comparison value produced from the comparison value selecting means 32 to determine whether the co-ordinate values are to be calculated or not. A calculating means 34 which, when a signal produced from a height comparing means 33 indicates calculation of co-ordinates, receives the induction signal from the tablet 2 to calculate co-ordinate values. Output of the calculation means 34 is connected to an external unit (not shown) such as a computer that works as a general purpose inter-face, and the calculated co-ordinate value is produced. The means 31, 32, 33, 34 constitute a co-ordinate outputting unit.

The operation of the co-ordinate reading apparatus of Figure 1 will now be described. In the tablet 2, the sense lines are selected successively. The operation of the selection of a predetermined number of sense lines is called "scanning". When the co-ordinate designator 1 is placed on a tablet 2, the scanning is effected and induction signals are successively generated on the sense lines due to alternating current signals generated by the co-ordinate designator. The greatest induction signals are generated on the sense lines near the coordinate designator. A maximum value of the induction signals is called a "peak value". The peak value has height data relating to the height of the co-ordinate designator above the tablet 2. The peak value increases as the co-ordinate designator is brought close to the surface of the tablet and decreases as the co-ordinate designator is moved away from the surface of the tablet. In the mode setting means 31 either a relative co-ordinate mode or an absolute co-ordinate mode is set. A control signal from the mode setting means 31 is input to the comparison value selecting means 32 which selects a comparison value prepared for each of the modes for comparing the peak values.

The height comparing means 33 compares a peak value input from the tablet 2 with a pre-set peak comparison value to determine whether the co-ordinate value is to be calculated or not. The peak comparison value is set to be high in the relative co-ordinate mode and is set to be low in the absolute co-ordinate mode. In the relative co-ordinate mode, therefore, the co-ordinate is not calculated unless the peak values are greater than those of the absolute co-ordinate mode, i.e. unless the co-ordinate designator is brought close to the tablet. The induction signal whose reading height is thus determined and produced, is then found as a co-ordinate value by the calculation means 34 and is sent to the external unit. In this case, the calculation means 34 finds a value of either the relative co-ordinate or of the absolute co-ordinate relying upon the data from the mode setting means 31.

The aforementioned co-ordinate value outputting unit 3, in practice, is realised by a micro-processor and a program thereof.

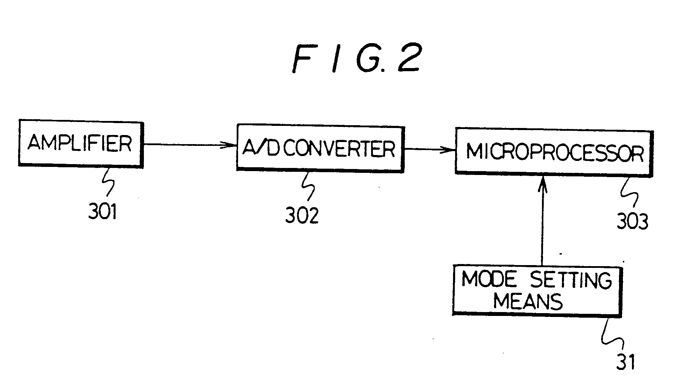

Figure 2 is a block diagram of the co-ordinate value outputting unit 3 of Figure 1. The induction signal detected by the tablet 2 is amplified to an amplifier 301, converted into a digital signal by an A/D converter 302, and is input to a micro-processor 303. The mode setting means 31 may be an electric switch whose output is read by the micro-processor 303.

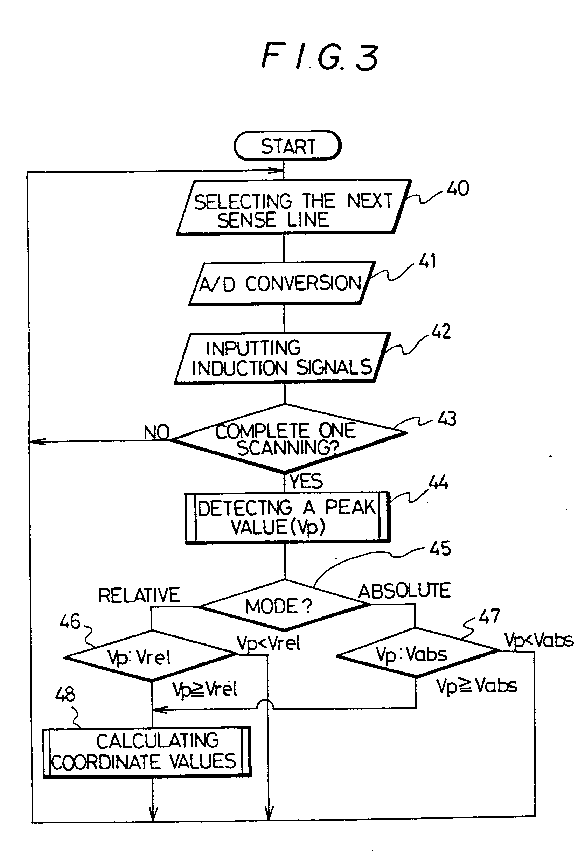

The height of the co-ordinate designator from the induction signal or tablet is found, whether the coordinate value is to be determined or not. The processing for calculating the co-ordinate value has all been programmed into the micro-processor 303. Figure 3 is a flow chart of the program of the co-ordinate value outputting unit 3. Sense lines are scanned in steps 40, 41, 42, 43 to effect the processing for inputting the induction signals. When one scan is completed at step 43, a peak value is detected in step 44 out of the induction signals that are input. The peak value is denoted by Vp. The mode setting means is tested in the step 45 to determine whether it is the relative co-ordinate mode or the absolute co-ordinate mode. When the mode is the relative co-ordinate mode, step 46 is executed and the peak value Vp is compared with a comparison value Vrel. When Vp ≧ Vrel in this step, a co-ordinate value is calculated from the induction signal in step 48 and is sent to the external unit. When Vp < Vrel, the co-ordinate value is not calculated, and the processing returns again to scanning i.e. steps 40, 41, 42, 43. When the absolute coordinate mode is detected in step 45, step 47 is executed. A comparison value Vabs in step 47 is different from that of step 46, i.e. Vrel > Vabs.

At which level the reading height is set, i.e. which values Vrel and Vabs are set, is determined in practice by evaluation experiment. According to the illustrated embodiment, the comparison value is so set that the reading height is about 10 mm in the absolute co-ordinate mode and is about 3 mm in the relative co-ordinate mode.

As described above, the present invention provides a co-ordinate reading apparatus which selects either the relative co-ordinate mode or the absolute co-ordinate mode to calculate a co-ordinate value, the reading height being set relatively low in a relative co-ordinate mode and being set to relatively high in the absolute co-ordinate mode. In the relative co-ordinate mode, therefore, the co-ordinate designator does not need to be lifted up greatly during movement of the co-ordinate designator, contributing to improved operability. In the absolute co-ordinate mode, the reading height can be maintained as in the conventional co-ordinate reading apparatus.

While the present invention has been described in relation to a co-ordinate reading apparatus of the electro-magnetic type it is also applicable to other types, e.g. the electro-static induction type, in which the co-ordinate designator and the tablet need not be brought into contact with each other to obtain the coordinate data.

## Claims

1. A co-ordinate reading apparatus for inputting co-ordinate values to a computer by utilising induction signals induced in either a co-ordinate designator (1) or a tablet (2) to calculate designated co-ordinate values, said apparatus characterised by comprising:
co-ordinate mode setting means (31) for selectively generating a co-ordinate mode signal corresponding to an absolute co-ordinate mode or a relative co-ordinate mode;
selecting means (32) responsive to said co-ordinate mode setting means (31) for outputting a first signal representing a first predetermined distance threshold value when the co-ordinate mode signal corresponds to the absolute co-ordinate mode or a second signal representing a second predetermined distance threshold value greater than the value represented by that of said first signal when the co-ordinate mode signal corresponds to the relative co-ordinate mode;
distance comparing means (33) responsive to said selecting means (32) for comparing a maximum value of said induction signals with said distance threshold representative signal outputted by the selecting means; and
calculating means (34) responsive to said distance comparing means for calculating co-ordinate values from said induction signals in the event that said maximum value exceeds said distance threshold representative signal.

2. A co-ordinate reading apparatus as claimed in claim 1, characterised in that said calculating means (34) includes first means for calculating absolute co-ordinate value and second means for calculating relative co-ordinate value.

3. A co-ordinate reading apparatus as claimed in claim 2, characterised in that said calculating means (34) includes means for selecting said second means when said mode signal corresponds to the relative mode and means for selecting the first means when said mode signal corresponds to the absolute mode.

## Patentansprüche

1. Koordinatenlesegerät zur Eingabe von Koordinatenwerten in einen Computer unter Verwendung von entweder in einem Koordinaterkennzeichner (1) oder einer Platte (2) induzierten Induktionssignalen zwecks Berechnung von gekennzeichneten Koordinatenwerten, **gekennzeichnet durch**
Koordinatenbetriebsart-Einstellmittel (31) zur selektiven Erzeugung eines einer Absolutkoordinatenbetriebsart oder einer Relativkoordinatenbetriebsart entsprechenden Koordinatenbetriebsartsignals;
von den Koordinatenbetriebsart-Einstellmitteln (31) angesteuerte Auswahlmittel (32) zur Abgabe eines ersten Signals, das einen ersten vorgegebenen Abstandsschwellwert bei der Absolutkoordinatenbetriebsart entsprechendem Koordinatenbetriebsartsignal repräsentiert, oder eines zweiten Signals, das einen zweiten vorgegebenen gegenüber dem durch das erste Signal repräsentierten Wert größeren Abstandsschwellwert bei der Relativkoordinatenbetriebsart entsprechendem Koordinatenbetriebsartsignal repräsentiert;
von den Auswahlmittein (32) angesteuerte Abstandsvergleichsmittel (33) zum Vergleich eines Maximalwertes der Induktionssignale mit dem von den Auswahlmitteln abgegebenen, den Abstandsschwellwert repräsentierenden Signal; und
von den Abstandsvergleichsmitteln angesteuerte Berechnungsmittel (34) zur Berechnung von Koordinatenwerten aus den Induktionssignalen für den Fall, daß der Maximalwert das den Abstandsschwellwert repräsentierende Signal übersteigt.

2. Koordinatenlesegerät nach Anspruch 1, **dadurch gekennzeichnet,** daß die Berechnungsmittel (34) erste Mittel zur Berechnung eines Absolutkoordinatenwertes und zweite Mittel zur Berechnung eines Relativkoordinatenwertes enthalten.

3. Koordinatenlesegerät nach Anspruch 2, **dadurch gekennzeichnet,** daß die Berechnungsmittel (34) Mittel zur Auswahl der zweiten Mittel, wenn das Betriebsartsignal der Relativbetriebsart entspricht, sowie Mittel zur Auswahl der ersten Mittel, wenn das Betriebsartsignal der Absolutbetriebsart entspricht, enthalten.

## Revendications

1. Un appareil de lecture de coordonnées pour l'introduction de valeurs de coordonnées dans un ordinateur par l'utilisation de signaux d'induction qui sont induits dans un dispositif de désignation de coordonnées (1) ou dans une tablette graphique (2), pour calculer des valeurs de coordonnées désignées, cet appareil étant caractérisé en ce qu'il comprend :
des moyens de fixation de mode de coordonnées (31) pour générer sélectivement un signal de mode de coordonnées correspondant à un mode de coordonnées absolues ou à un mode de coordonnées relatives;
des moyens de sélection (32) qui fonctionnent sous la dépendance des moyens de fixation de mode de coordonnées (31), de façon à émettre un premier signal représentant une première valeur de seuil de distance prédéterminée lorsque le signal de mode de coordonnées correspond au mode de coordonnées absolues, ou un second signal représentant une seconde valeur de seuil de distance prédéterminée, supérieure à la valeur qui est représentée par le premier signal, lorsque le signal de mode de coordonnées correspond au mode de coordonnées relatives;
des moyens de comparaison de distance (33) qui fonctionnent sous la dépendance des moyens de sélection (32) de façon à comparer une valeur maximale des signaux d'induction avec le signal représentatif du seuil de distance qui est émis par les moyens de sélection; et
des moyens de calcul (34) qui fonctionnent sous la dépendance des moyens de comparaison de distance de façon à calculer des valeurs de coordonnées à partir des signaux d'induction, dans le cas où la valeur maximale précitée dépasse le signal représentatif du seuil de distance.

2. Appareil de lecture de coordonnées selon la revendication 1, caractérisé en ce que les moyens de calcul (34) comprennent des premiers moyens pour calculer une valeur de coordonnées absolues et des seconds moyens pour calculer une valeur de coordonnées relatives.

3. Un appareil de lecture de coordonnées selon la revendication 2, caractérisé en ce que les moyens de calcul (34) comprennent des moyens destinés à sélectionner les seconds moyens lorsque le signal de mode correspond au mode relatif, et des moyens destinés à sélectionner les premiers moyens lorsque le signal de mode correspond au mode absolu.
